# EUROPEAN PATENT APPLICATION

(11) **EP 1 793 540 A1**
(43) Date of publication of application: **06.06.2007**
(21) Application number: 06125056.9
(22) Date of filing: 30.11.2006
(51) Int. Cl.: H04L 12/56, H04B 7/185

(54) **Adaptive packet scheduling apparatus for uncapsulated data communication in interactive satellite communication system, and data transmission/reception system and transmitting method using the same**

(30) Priority: 01.12.2005 KR 20050116054; 25.07.2006 KR 20060069951
(71) Applicant: ELECTRONICS AND TELECOMMUNICATIONS RESEARCH INSTITUTE, Daejeon 305-350 (KR)
(72) Inventor: Shin, Min-Su 101-1402 Banseok maeul Site 1, Daejon 305-772 (KR); Chang, Dae-Ig, Daejon 302-280 (KR); Oh, Deock-Gil, Daejon 302-120 (KR)
(74) Representative: Betten & Resch

(57) **Abstract**

Provided is an adaptive packet scheduling apparatus for uncapsulated data communication in an interactive satellite communication system, and a data transmission/reception system and transmitting method using the same. The apparatus includes: a packet classifying unit for classifying an inputted IP packet and transmitting the classified IP packets; a plurality of IP packet storing units for storing the classified IP packets; a framing unit for reading the IP packets; and a control information managing unit for determining the transmitting method of the IP packet, controlling the packet classifying unit to classify the inputted IP packet and transmit the IP packet to the IP packet storing unit, and controlling the framing unit to read the IP packets.

## Description

### Field of the Invention

The present invention relates to an adaptive packet scheduling apparatus for uncapsulated data communication in an interactive satellite communication system, and a data transmission/reception system and transmitting method using the same; and, more particularly, to an adaptive packet scheduling apparatus for transmitting uncapsulated communication data to diverse mobile stations having different reception channel environments according to a transmitting method proper to each reception channel environment, transmitting the communication data according to a method having no overhead by conventional MPE/MPEG-2 Transport Stream (TS) capsulation in transmission, and normally receiving a communication data stream in an interactive satellite communication system including a base station and a mobile station and transmitting communication data in an Internet Protocol (IP) packet format by Digital Video Broadcasting-Satellite 2 (DVB-S2) standard, and a data transmission/reception system and transmitting method using the same.

### Description of Related Art

In general, a method for encapsulating communication data of an IP format by using a Multi-Protocol Encapsulation (MPE)/Moving Picture Experts Group 2 (MPEG-2) TS packet format and transmitting the communication data according to a specific modulating method is used to transmit the communication data through a conventional interactive satellite transmission system. The MPE method is suggested to transmit communication data by using a digital broadcasting transmitting/receiving system at an early stage. The MPE method applies a data communication protocol to a digital broadcasting system to process communication data transmitted through a broadcasting network in a receiver according to the same method as data transmitted through a communication network such as Ethernet are processed.

However, since the MPE/MPEG-2 TS packet capsulating method is inserting additional header information into a pure IP packet, overhead of more than 10% is commonly generated. An unnecessary cost is also generated by the overhead in an application field requiring efficient data transmission such as an expensive transport network including a satellite network or a narrow-band mobile communication network. Accordingly, MPE/MPEG-2 TS packet is not capsulated and a method for directly transmitting the IP packet has been studied. A Digital Video Broadcasting-Satellite 2 (DVB-S2) standard completely standardized in early 2005 defines a stream for transmitting the IP packet without capsulation. However, the DVB-S2 standard does not mention a method for transmitting the communication data such as the IP packet without capsulation in order that the receiver can normally receive the communication data, and a process for receiving non-capsulated stream. Therefore, it is required to define a process flow.

### Summary of the Invention

It is, therefore, an object of the present invention to provide an adaptive packet scheduling apparatus for uncapsulated data communication to directly transmit an IP packet without capsulation in an interactive satellite transmitting/receiving system including a base station and a mobile station and normally receive the data in the mobile station, and a data transmission/reception system and transmitting method using the same.

Other objects and advantages of the invention will be understood by the following description and become more apparent from the embodiments in accordance with the present invention, which are set forth hereinafter. It will be also apparent that objects and advantages of the invention can be embodied easily by the means defined in claims and combinations thereof.

In accordance with an aspect of the present invention, there is provided an adaptive packet scheduling apparatus for uncapsulated data communication in an interactive satellite communication system, the apparatus including: a packet classifying unit for classifying inputted IP packets based on the destination IP address and transmitting the classified IP packets to corresponding IP packet storing unit; a plurality of IP packet storing units for respectively storing the classified IP packets; a framing unit for reading the IP packets stored in the IP packet storing unit on the basis of a baseband frame length unit according to a corresponding transmitting method; and a control information managing unit for determining the transmitting method of the IP packet based on a destination IP address list and channel reception state information of each mobile station, controlling the packet classifying unit to classify the inputted IP packet based on the destination IP address and transmit the IP packets to the IP packet storing unit, and controlling the framing unit to read the IP packets stored in the IP packet storing unit on the basis of a baseband frame length unit according to the transmitting method.

In accordance with another aspect of the present invention, there is provided a transmitting system for uncapsulated data communication in an interactive satellite communication system, the system including: an IP address list acquiring unit for acquiring an IP address list of each mobile station through the Internet; a backward link demodulator for demodulating channel reception state information and traffic data on each mobile station from a satellite; an adaptive packet scheduler for determining a transmitting method of IP packets based on the destination IP address list acquired from the IP address list acquiring unit and channel reception state information of each mobile station demodulated in the backward link demodulator, classifying the inputted IP packets based on the destination IP address, transmitting the classified IP packets to corresponding IP packet storages, and reading the IP packets stored in each of the IP packet storages on the basis of a baseband frame length unit according to the transmitting method; a forward link modulator for performing modulating and channel coding on the data read in the adaptive packet scheduler according to diverse transmitting methods in conformity to a Digital Video Broadcasting-Satellite 2 (DVB-S2) standard; and a transmitting unit for performing frequency up-conversion on a modulation signal modulated in the forward link modulator and transmitting the signal to the satellite.

In accordance with another aspect of the present invention, there is provided a transmitting method for uncapsulated data communication in an interactive satellite communication system, the method including the steps of: a) acquiring an IP address list of each mobile station through the Internet; b) demodulating channel reception state information and traffic data on each mobile station from a satellite; c) determining a transmitting method of the IP packets based on the acquired destination IP address list and demodulated channel reception state information of each mobile station; d) classifying the inputted IP packet based on the destination IP address and transmitting the IP packets to corresponding IP packet storages; e) reading the IP packets respectively stored in the IP packet storages on the basis of baseband frame length unit according to the transmitting method; f) performing modulating and channel coding on the read data according to diverse transmitting methods in conformity to a Digital Video Broadcasting-Satellite 2 (DVB-S2) standard; and g) performing frequency up-conversion on a modulated modulation signal and transmitting the signal to the satellite.

In accordance with another aspect of the present invention, there is provided a reception system for uncapsulated data communication in an interactive satellite communication system, the system including: a transmitting unit for performing frequency down-conversion on a modulation signal transmitted from a base station, transmitting the modulation signal to a forward link demodulator, performing frequency up-conversion on channel reception state information transmitted from the backward link modulator, and transmitting the channel reception state information to a satellite; the forward link demodulator for performing demodulating and channel decoding on the modulated and channel coded signal transmitted from the transmitting unit in conformity to a Digital Video Broadcasting-Satellite 2 (DVB-S2) standard and outputting an IP packet stream; a data processor for creating channel reception state information of a user terminal connected to own network, extracting and transmitting data thereto among IP packets, which are stream data, of a baseband frame length demodulated in the forward link demodulator, adding an Ethernet header to the IP packet and transmitting the data to the user terminal; and a backward link modulator for modulating the channel reception state information created in the data processor and transmitting the channel reception state information to the transmitting unit.

The present invention can maximize data transmission efficiency by directly transmitting the IP packet without using a conventional MPE/MPEG-TS method. The transmitting method of the present invention is necessarily required in an application field for transmitting communication data with broadcasting data to provide a recently emerging convergence service between communication and broadcasting. Since a narrow-band such as an expensive transmission network or a mobile communication network is used in the present invention, the transmitting method can be efficient in the application field affected by data compression and transmission efficiency.

### Brief Description of the Drawings

The above and other objects and features of the present invention will become apparent from the following description of the preferred embodiments given in conjunction with the accompanying drawings, in which:
Fig. 1 is a block diagram showing a data transmission/reception system for uncapsulated data communication in an interactive satellite communication system in accordance with an embodiment of the present invention;
Fig. 2 is a block diagram showing an adaptive packet scheduling apparatus of the data transmitting system for uncapsulated data communication in the interactive satellite communication system in accordance with the embodiment of the present invention; and
Fig. 3 shows an inner structure of a data processor of a data reception system for uncapsulated data communication in the interactive satellite communication system in accordance with an embodiment of the present invention.

### Detailed Description of the Invention

Other objects and advantages of the present invention will become apparent from the following description of the embodiments with reference to the accompanying drawings. Therefore, those skilled in the art of the present invention can embody the technological concept and scope of the invention easily. In addition, if it is considered that detailed description on a related art may obscure the points of the present invention, the detailed description will not be provided herein. The preferred embodiments of the present invention will be described in detail hereinafter with reference to the attached drawings.

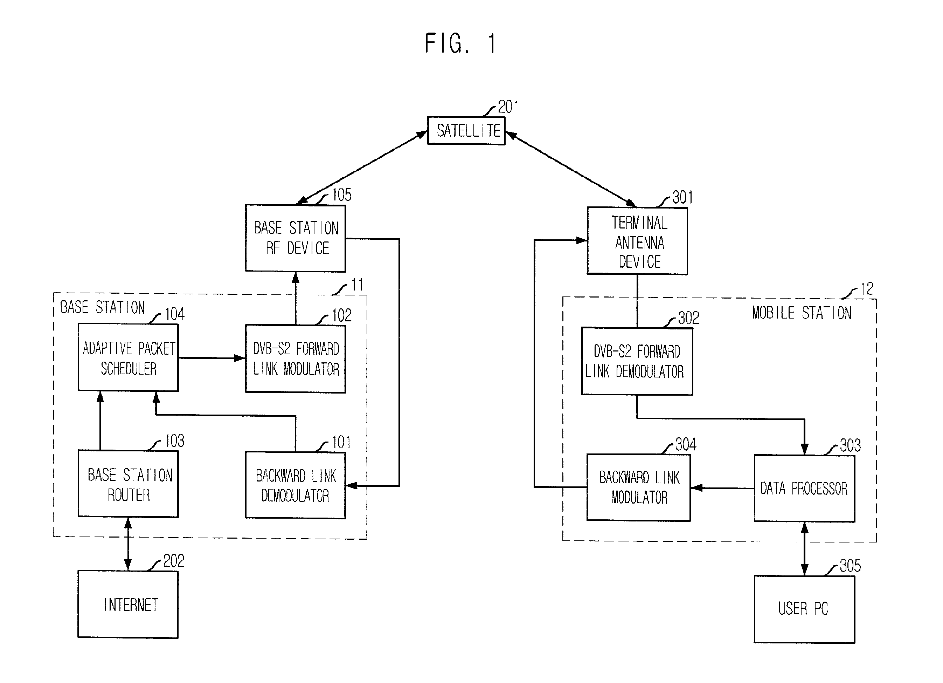

Fig. 1 is a block diagram showing a data transmission/reception system for uncapsulated data communication in an interactive satellite communication system in accordance with an embodiment of the present invention.

The data transmission/reception system of Fig. 1 shows a backward link demodulator 101, a Digital Video Broadcasting-Satellite 2 (DVB-S2) forward link modulator 102, a base station router 103, a adaptive packet scheduler 104, a base station RF device 105, a satellite 201, the Internet 202, a terminal antenna device 301, a DVB-S2 forward link demodulator 302, a data processor 303, a backward link modulator 304, and a user PC 305 connected to the mobile station 12.

The data transmission/reception system for uncapsulated data communication in the interactive satellite communication system of the present invention includes a base station 11 and a mobile station 12.

The base station 11 includes the base station router 103, the adaptive packet scheduler 104, the DVB-S2 forward link modulator 102, the base station RF device 105 and the backward link demodulator 101.

The base station router 103 is connected to the external Internet 202. The adaptive packet scheduler 104 classifies packets to apply different transmitting methods according to a channel reception state of each mobile station. The DVB-S2 forward link modulator 102 performs modulating and channel coding on input data according to diverse transmitting methods in conformity to a DVB-S2 standard. The base station RF device 105 performs frequency up-conversion on a modulation signal and transmits the modulation signal to the satellite. The backward link demodulator 101 receives channel reception state information and traffic data of each mobile station through the satellite 201.

The mobile station 12 includes the terminal antenna device 301, the DVB-S2 forward link demodulator 302, the data processor 303 and the backward link modulator 304.

The terminal antenna device 301 receives the signal from the satellite 201. The DVB-S2 forward link demodulator 302 receives the modulated and channel coded signal from the base station 11 and performs demodulating and channel decoding of the DVB-S2 standard. The data processor 303 transmits/receives data with the user PC 305 connected to the mobile station 12 and creates channel reception state information. The backward link modulator 304 transmits mobile station channel reception state information and traffic data to the base station 11 through the satellite 201.

To be specific, the backward link demodulator 101 of the base station 11 receives backward link data from the mobile station 12 through the satellite 201 and the processed data include backward link traffic data and reception state information of the mobile station.

The DVB-S2 forward link modulator 102 performs mode and stream adapting, channel coding, and modulating on a plurality of input streams in conformity to the DVB-S2 standard.

The base station router 103 of the base station 11 transmits/receives data with the Internet 202.

The adaptive packet scheduler 104 receives forward link traffic data to be transmitted to the mobile station 12 and inputs the forward link traffic data in each queue, which are different from each other, according to transmitting methods classified by a destination IP address of each traffic data. In order to divide the input data, the adaptive packet scheduler 104 should receive a Signal-to-Noise Ratio (SNR) of each mobile station through a backward link receiver to divide the input data, determines to which mobile station and by which transmitting method the SNR is to be transmitted, and store IP address information of user PCs connected to a specific mobile station.

The input stream of the adaptive packet scheduler 104 can be classified according to each transmitting method based on the mobile station management information. The base station RF device 105 performs frequency up-conversion on the forward link data outputted from the DVB-S2 forward link modulator 102, transmits the forward link data to the satellite and performs frequency down-conversion to transmit the backward link data from the satellite 201 to the backward link demodulator 101.

The terminal antenna device 301 of the mobile station system performs frequency down-conversion on the signal transmitted from the base station 11 and transmits the signal to the DVB-S2 forward link demodulator 302. Also, the terminal antenna device 301 performs frequency up-conversion on the modulation signal, i.e., channel reception state information, transmitted from the backward link modulator 304 and transmits the modulation signal to the satellite 201.

The DVB-S2 forward link demodulator 302 performs demodulating, channel decoding, mode and stream deadapting on the modulation signal transmitted from the terminal antenna device 301 in conformity to the DVB-S2 standard. In case of broadcasting data, an MPEG-2 TS packet is finally outputted. In case of communication data, an IP packet stream is outputted.

The broadcasting data are transmitted to an MPEG-2 decode chip same as a general satellite broadcasting receiver. However, since the IP packets to be transmitted to diverse mobile stations using the same transmitting method in the base station are classified and transmitted on the basis of baseband frame unit in case of communication data, one IP packet may be transmitted as two baseband frames, or IP packets in the inside of baseband frames transmitted to a specific mobile station may be transmitted to other mobile station.

To solve the above problem, the data processor 303 of the mobile station 12 extracts only the IP packet transmitted to the data processor 303 based on IP address information of the user PC 305 connected to own network among IP packets in the inside of the transmitted baseband frame, adds an Ethernet header to a corresponding IP packet and transmits the IP packet to the user PC 305.

The backward link modulator 304 performs modulating and channel coding to transmit the backward link traffic data from the user PC 305 to the satellite through the data processor 303. The user PC 305, which is a device for receiving data, transmits/receives data through the data processor 303.

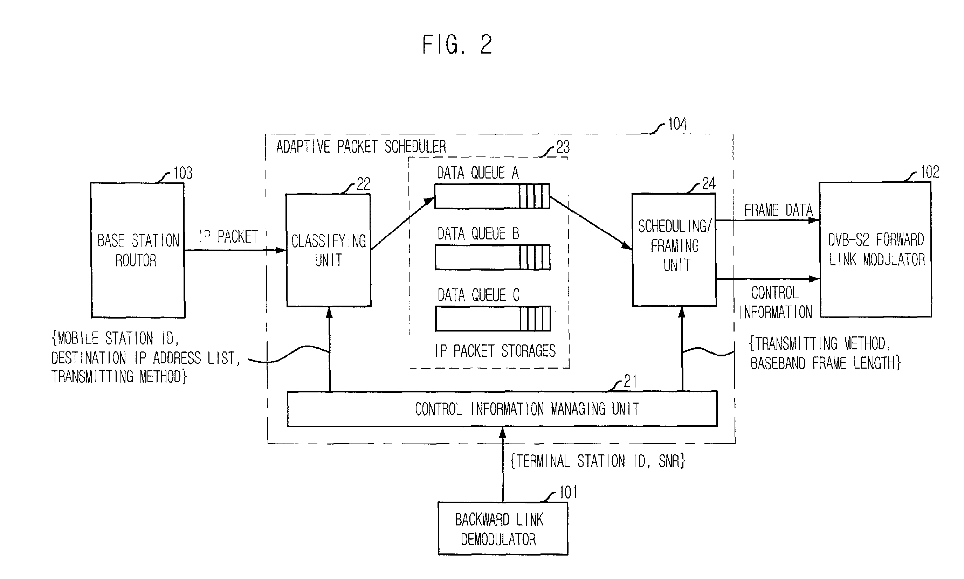

Fig. 2 is a block diagram showing an adaptive packet scheduling apparatus of the data transmitting system for uncapsulated data communication in the interactive satellite communication system in accordance with the embodiment of the present invention.

The adaptive packet scheduling apparatus of the data transmitting system for uncapsulated data communication in the interactive satellite communication system of the present invention, i.e., the adaptive packet scheduler 104 includes a classifying unit 22, a plurality of IP packet storages 23, a scheduling/framing unit 24, and a control information managing unit 21.

The classifying unit 22 transmits the IP packets inputted under the control of the control information managing unit 21 to the IP packet storage 23, i.e., the data queue.

The IP packet storages 23 respectively store IP packets classified in the classifying unit 22. The scheduling/framing unit 24 reads each IP packet stored in the IP packet storages 23 on the basis of baseband frame length unit according to a corresponding transmitting method by control of the control information managing unit 21. The control information managing unit 21 determines a transmitting method of the IP packet based on a destination IP address list and channel reception state information including the mobile station ID and the SNR of each mobile station demodulated by the backward link demodulator 101. Also, the control information managing unit 21 controls the classifying unit 22 to divide the inputted IP packet based on the destination IP address and transmit the IP packet to the IP packet storage 23. The control information managing unit 21 controls the scheduling/framing unit 24 to read the IP packet stored in a plurality of IP packet storages 23 on the basis of baseband frame length unit according to the corresponding transmitting method.

To be specific, when the control information managing unit 21 performs initializing, the control information managing unit 21 acquires an IP address list, i.e., a destination IP address list, of the users PC 305 connected to all mobile stations.

Also, the control information managing unit 21 determines a transmitting method of the inputted IP packet based on the destination IP address list and the channel reception state information including the mobile station ID and the SNR of each mobile station transmitted from the backward link demodulator 101.

As an example, a range of the SNR is divided into three steps, i.e., the minimum/maximum SNR is divided into equal three sections, and the IP packet is transmitted on the basis of corresponding baseband frame length unit.

Also, the control information managing unit 21 manages baseband frame length information according to the transmitting method to control operations of the scheduling/framing unit 24. A framer cuts data of a data queue on the basis of baseband frame length unit to process the data queue according to each transmitting method in the DVB-S2 forward link modulator 102. The framer receives the baseband frame information according to each transmitting method of data queue from the control information managing unit 21.

Also, when the IP packet is transmitted from the base station router 103, the classifying unit 22 classifies the corresponding input packet based on the destination IP address of the input IP packet.

Meanwhile, each data queue of the IP packet storage 23 is operated one by one according to the used transmitting method. Fig. 2 shows each case of three transmitting methods. When each data queue is initially set up, it should be determined which transmitting method is to be used.

The scheduling/framing unit 24 receives data from each queue, cuts and transmits the data of the data queue on the basis of the baseband frame length unit which is set up according to the transmitting method.

That is, the scheduler determines of which data queue the data is to be transmitted, and a Round Robin method or other developed scheduling algorithm can be basically used.

The framer receives data of the data queue selected by the scheduler as long as the length of the baseband frame proper to the transmitting method allocated to the queue. Herein, the length information of the baseband frame for each transmitting method is transmitted from the control information managing unit 21.

In the DVB-S2 standard, data are transmitted as one carrier for each frame according to different transmitting methods. Accordingly, the lengths of the data frame inputted into a channel encoder should be changed according to the transmitting method in order to maintain a final output symbol speed. That is, the baseband frame length should be fixed according to the transmitting method.

When data are inputted to the modulator regardless of the length of the baseband frame processed in the modulator, information exceeding the baseband frame length should be continuously stored in the inside of the modulator, and a buffer should be operated with respect to all transmitting methods. Therefore, a framer function cutting and transmitting data to fit to the baseband frame length before inputting data in the DVB-S2 forward link modulator 102 should be executed.

Also, the scheduling/framing unit 24 provides transmitting method information to be applied to the outputted frame data. Accordingly, the modulator can process input data without information in advance.

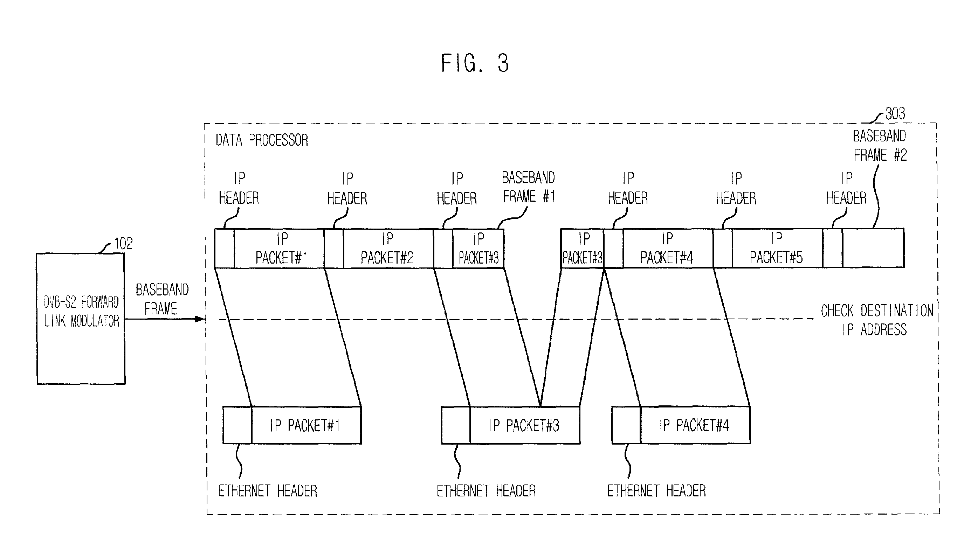

Fig. 3 shows an inner structure of the data processor of the data reception system for uncapsulated data communication in the interactive satellite communication system in accordance with an embodiment of the present invention. Fig. 3 shows a process in the mobile station when the IP packet is transmitted as shown in Fig. 2. The signal transmitted from the base station is transmitted to the DVB-S2 forward link demodulator 302 through the terminal antenna device 301.

The DVB-S2 forward link demodulator 302 performs demodulation, channel decoding, mode and stream deadapting on the input signal in conformity to the DVB-S2 standard. Subsequently, the DVB-S2 forward link demodulator 302 outputs the input signal in an MPEG-2 TS packet format in case of broadcasting data and in an IP packet format in case of communication data. The communication data among the outputted data are inputted to the data processor 303.

The communication data inputted to the data processor 303 includes consecutive IP packets as long as baseband frame length. In case of initially transmitted communication data, the baseband frame starts as an IP packet header and a last IP packet of the consecutive IP packets may not be a perfect IP packet.

When the data of the data queue are cut to fit to the baseband frame length in transmission of the data in the base station 11, the data can be divided into two baseband frames at the center of the IP packet. Accordingly, while processing the consecutive baseband frame, a function for checking whether the IP packet is classified into two baseband frames based on the IP header information is required.

Also, since one baseband frame includes communication data to be transmitted to a plurality of mobile stations 12, IP packets to be transmitted to other mobile stations are included in the inside of the baseband frame transmitted to a specific mobile station.

Therefore, a mobile station 12 should determine in the process of checking the IP packet header whether the communication data are transmitted to itself or to be transmitted to other mobile stations. Also, the mobile station 12 should have IP address information of the user PCs 305 connected to own network. In general, the mobile station 12 should create and transmit an Ethernet header to transmit the IP packet to the user PC 305.

In this process, a quantity of data to be processed in the mobile station 12 can be reduced by creating the Ethernet header based on a Multiple Access Computer (MAC) address, i.e., a hardware address of the DVB-S2 forward link demodulator 302, for the IP packet transmitted to the mobile station 12 and discarding the IP packet to be transmitted to other mobile stations.

The adaptive packet scheduler 104 receives channel reception state information including a mobile station ID and the SNR transmitted from the mobile station 12 through the backward link demodulator 101 to transmit IP packets to be transmitted through a forward link according to a transmitting method proper to each mobile station reception state.

The adaptive packet scheduler 104 receiving the channel reception state information determines a proper transmitting method such as a modulating method and a channel coding method to be used for the mobile station based on the reception SNR information of each mobile station transmitted from the backward link demodulator 101.

The determined transmitting method is managed with a mobile station identification (ID) allocated to each mobile station and destination IP address of the user PC mapped on each mobile station ID.

Subsequently, the IP packets transmitted from the base station router 103 are inputted to the adaptive packet scheduler and the mobile station of each IP packet is determined by the destination IP address. Also, the IP packets are respectively inputted to a corresponding data queue according to the transmitting method allocated to the mobile station.

Also, when data stored in a plurality of queues are outputted to the DVB-S2 forward link modulator 102, the adaptive packet scheduler 104 can apply a round robin method or other scheduling techniques. A baseband (BB) frame is used to transmit broadcasting and communication data in the DVB-S2 standard. It means that the input data stream is encapsulated again to transmit the MPEG-TS packet or the IP packet as one transmission carrier according to different transmitting methods.

Also, lengths of the baseband frames used in the adaptive packet scheduler 104 are different according to a transmitting method to maintain a regular symbol rate while using different transmitting methods. The lengths of the channel encoder input frames are differently ruled according to the transmitting method to set up the length of the channel encoder output stream at 64800 bits or 16400 bits.

When the adaptive packet scheduler 104 outputs data to the DVB-S2 forward link modulator 102, the data of the queue should be cut and outputted on the basis of the baseband frame length corresponding to the transmitting method allocated to each queue. Otherwise, it is difficult to realize the adaptive packet scheduler 104 and transmission delay can be generated since other buffer corresponding to the transmitting method should be operated in the inside of the modulator.

Therefore, the DVB-S2 forward link modulator 102 receives data of the baseband frame length and corresponding transmitting method information. Mode and stream adapting, and channel coding and modulating are performed on the data of the baseband frame length and corresponding transmitting method information. Subsequently, the data of the baseband frame length and corresponding transmitting method information are transmitted through the antenna.

The communication data can be extracted in the DVB-S2 forward link demodulator 302 through the terminal antenna device 301 by performing the steps of demodulating based on the DVB-S2 standard, channel decoding and mode and stream deadapting. Herein, it can be determined to which mobile station the IP packet encapsulated and transmitted to the conventional MPE/MPEG-2 TS packet is to be transmitted based on a destination hardware address included in the MPE header. However, when the IP packet is not capsulated into the MPE/MPEG-2 TS packet, the destination hardware information cannot be used and there is no information for directly determining the reception mobile station.

To solve the problem, the data processor 303 of the mobile station 12 classifies the consecutive IP packet in the inside of the IP stream transmitted on the basis of the baseband frame unit. Subsequently, when it is determined based on the destination IP address of each IP packet that the data are transmitted to own mobile station, the data are processed.

The present invention can improve transmission efficiency in a system using an expensive satellite network by substituting the conventional IP packet transmitting method in the interactive satellite communication system in conformity to the DVB-S2 standard, and suggesting the method for transmitting the uncapsulated data and the method for normally receiving the uncapsulated data in the mobile station.

As described in detail, the technology of the present invention can be realized as a program and stored in a computer-readable recording medium, such as CD-ROM, RAM, ROM, a floppy disk, a hard disk and a magneto-optical disk. Since the process can be easily implemented by those skilled in the art of the present invention, further description will not be provided herein.

The present application contains subject matter related to Korean patent application Nos. 2005-0116054 and 2006-0069951, filed with the Korean Intellectual Property Office on December 1, 2005, and July 25, 2006, respectively, the entire contents of which are incorporated herein by reference.

While the present invention has been described with respect to certain preferred embodiments, it will be apparent to those skilled in the art that various changes and modifications may be made without departing from the scope of the invention as defined in the following claims.

## Claims

1. An adaptive packet scheduling apparatus for uncapsulated data communication in an interactive satellite communication system, comprising:
a packet classifying means for classifying an inputted IP packet based on the destination IP address and transmitting the classified IP packets to corresponding IP packet storing means;
a plurality of IP packet storing means for respectively storing the classified IP packets;
a framing means for reading the IP packets stored in the IP packet storing means on the basis of a baseband frame length unit according to a corresponding transmitting method; and
a control information managing means for determining the transmitting method of the IP packet based on a destination IP address list and channel reception state information of each mobile station, controlling the packet classifying means to classify the inputted IP packets based on the destination IP address and transmit the IP packets to the IP packet storing means, and controlling the framing means to read the IP packets stored in the IP packet storing means on the basis of a baseband frame length unit according to the transmitting method.

2. The apparatus as recited in claim 1, wherein the channel reception state information includes identification (ID) and Signal to Noise Ratio (SNR) of each mobile station.

3. The apparatus as recited in claim 1 or 2, wherein the framing means reads the IP packets in the IP packet storing means on the basis of the baseband frame length unit according to the transmitting method.

4. A transmitting system for uncapsulated data communication in an interactive satellite communication system, comprising:
an IP address list acquiring means for acquiring an IP address list of each mobile station through the Internet;
a backward link demodulating means for demodulating channel reception state information and traffic data on each mobile station from a satellite;
an adaptive packet scheduling means for determining a transmitting method of IP packets based on the destination IP address list acquired from the IP address list acquiring means and channel reception state information of each mobile station demodulated in the backward link demodulating means, classifying the inputted IP packets based on the destination IP address, transmitting the classified IP packets to corresponding IP packet storages, and reading the IP packets stored in each of the IP packet storages on the basis of a baseband frame length unit according to the transmitting method;
a forward link modulating means for performing modulating and channel coding on the data read in the adaptive packet scheduling means according to diverse transmitting methods in conformity to a Digital Video Broadcasting-Satellite 2 (DVB-S2) standard; and
a transmitting means for performing frequency up-conversion on a modulation signal modulated in the forward link modulating means and transmitting the signal to the satellite.

5. The system as recited in claim 4, wherein the adaptive packet scheduling means includes:
a packet classifying unit for classifying the inputted IP packets based on the destination IP address and transmitting the classified IP packets to a corresponding IP packet storing unit;
a plurality of IP packet storing units for respectively storing the classified IP packets classified by the packet classifying unit;
a framing unit for reading the IP packets respectively stored in the IP packet storing unit on the basis of a baseband frame length unit according to a corresponding transmitting method; and
a control information managing unit for determining the transmitting method of the IP packets based on a destination IP address list and channel reception state information of each mobile station, controlling the packet classifying unit to classify the inputted IP packet based on the destination IP address and transmit the IP packet to the IP packet storing unit, and controlling the framing unit to read the IP packets respectively stored in the IP packets storing unit on the basis of baseband frame length unit according to the transmitting method.

6. The system as recited in claim 4 or 5, wherein the adaptive packet scheduler reads the IP packet in the IP packet storing means by a round robin method on the basis of baseband frame length unit according to the transmitting method.

7. A transmitting method for uncapsulated data communication in an interactive satellite communication system, comprising the steps of:
a) acquiring an IP address list of each mobile station through the Internet;
b) demodulating channel reception state information and traffic data on each mobile station from a satellite;
c) determining a transmitting method of the IP packets based on the acquired destination IP address list and demodulated channel reception state information of each mobile station;
d) classifying the inputted IP packet based on the destination IP address and transmitting the IP packets to corresponding IP packet storages;
e) reading the IP packets respectively stored in the IP packet storages on the basis of baseband frame length unit according to the transmitting method;
f) performing modulating and channel coding on the read data according to diverse transmitting methods in conformity to a Digital Video Broadcasting-Satellite 2 (DVB-S2) standard; and
g) performing frequency up-conversion on a modulated modulation signal and transmitting the signal to the satellite.

8. The method as recited in claim 7, wherein in the reading step e), the IP packets are read in an IP packet storing unit by a round robin method on the basis of a baseband frame length unit according to the transmitting method.

9. A reception system for uncapsulated data communication in an interactive satellite communication system, comprising:
a transmitting means for performing frequency down-conversion on a modulation signal transmitted from a base station, transmitting the modulation signal to a forward link demodulating means, performing frequency up-conversion on channel reception state information transmitted from the backward link modulating means, and transmitting the channel reception state information to a satellite;
the forward link demodulating means for performing demodulating and channel decoding on the modulated and channel coded signal transmitted from the transmitting means in conformity to a Digital Video Broadcasting-Satellite 2 (DVB-S2) standard and outputting an IP packet stream;
a data processing means for creating channel reception state information of a user terminal connected thereto, extracting and transmitting data thereto among IP packets, which are stream data, of a baseband frame length demodulated in the forward link demodulating means, adding an Ethernet header to the IP packet and transmitting the data to the user terminal; and
a backward link modulating means for modulating the channel reception state information created in the data processing means and transmitting the channel reception state information to the transmitting means.
